# EUROPEAN PATENT SPECIFICATION

(11) **EP 0 437 841 B1**
(45) Date of publication and mention of the grant of the patent: **01.12.1993**
(21) Application number: 90125624.8
(22) Date of filing: 28.12.1990
(51) Int. Cl.: B60R 16/02

(54) **Self contained device for giving audible messages to occupants of a vehicle**
Unabhängiges Gerät zum Ausgeben von hörbaren Mitteilungen an Fahrzeuginsassen
Appareil indépendant pour donner des messages audibles aux occupants d'un véhicule

(30) Priority: 16.01.1990 US 465774
(43) Date of publication of application: 24.07.1991
(73) Proprietor: Apfel, Stephen M., New York, N.Y. 11240 (US)
(72) Inventor: Apfel, Stephen M., New York, N.Y. 11240 (US)
(74) Representative: Lucas, Brian Ronald

(56) References cited:
- DE-A- 3 037 282
- DE-A- 3 037 296
- FR-A- 2 076 579
- US-A- 3 870 818
- US-A- 4 677 429
- US-A- 4 846 382

## Description

### BACKGROUND OF THE INVENTION

### FIELD OF INVENTION

This invention relates to a device for providing audible messages and, more particularly, to a self-contained device for giving such audible messages to occupants of a vehicle as disclosed in DE-A-3 037 282.

### DESCRIPTION OF PRIOR ART

Use of a seat belt in an automobile for preventing serious injury and death is known, and considerable efforts have been focused on encouraging non-wearers to wear seat belts. These efforts include promotional campaigns, vehicle-installed warning buzzers and lights, passive restraint systems, and even legal fines. Unfortunately, many lives are still lost every year which could otherwise be saved by buckled seat belts.

Many people simply forget to wear their seat belts. Vehicle-installed warning lights and buzzers were intended as reminders to otherwise forgetful passengers. These indicators were viewed by many motorists as annoyances and were, in many cases, disconnected, thereby defeating their purpose.

Known synthesized voice systems are available and are largely well-received by most people. Telephone numbers are being given by synthesized voices, soda machines are suggesting different selections, and now virtually all car manufacturers offer automobiles with a synthesized voice to warn the motorist of various conditions, such as keys left in the ignition, low oil, etc. The synthesized voice is being used to remind motorists to secure their seat belts and this approach resulting in a greater number of motorists securing their seat belts.

While the use of synthesized voice seat belt warning systems has been proven successful and necessary, a problem exists with the millions of older vehicles with systems which are inadequate, disconnected or nonexistent.

Another consideration is that a driver may want to warn his passengers to buckle their seat belts during their journey; available systems are incapable of re-announcing the warning to delinquent passengers.

Accordingly, there exists a need for providing in vehicles, seat belt systems which may be operated at will.

Numerous innovations are known for self-contained devices providing audible messages to vehicle occupants. Although these innovations have use for specific purposes, they are not suitable for the purposes of the present invention as heretofore described.

### SUMMARY OF THE INVENTION

One feature of the present invention is to provide a self-contained device for giving audible messages to occupants of a vehicle, avoiding disadvantages of the prior art.

More particularly, it is an object of the present invention to provide a reminder device. Power is supplied to the reminder device when the ignition switch is turned on.

The reminder device of the present invention includes a housing and circuit means contained within the housing, the latter having a speech synthesizer for generating an audible message. The device further includes means to electrically interconnect the circuit means and an electrical outlet. Thus, the speech synthesizer is activated to generate the audible messages when the ignition switch is turned on. The reminder device still further includes a normally open switch that is electrically connected to the circuit means. The momentary closure or the normally open switch deactivates the speech synthesizer to halt the audible message, once the speech synthesizer has been activated by turning on the ignition switch. Thus, the reminder device is entirely self-contained and adapted to be installed in the vehicle.

The use of such a device reminds the driver to respond to a recorded message which may indicate the safety benefits, or the legal responsibility of such. A remote switch of the system may be pressed to deactivate the message. This switch, which may alternatively activate the message, may be pressed when passengers do not secure their seat belts. Thus, the system circumvents known systems since it allows the driver to remind other passengers.

A preferred form of the device is a self-contained device for giving audible messages comprising, a housing having a top, a side, and a front, a power source disposed remotely from the housing, a VELCRO^{R} strap disposed on the top of the housing so that the self-contained device giving audible messages can be mounted under the dashboard of the vehicle, a first negative electrode disposed from the housing, a first positive electrode disposed from the housing, the first positive electrode and the first negative electrode together connecting the self-contained device for giving audible messages to the remote power source, a normally open switch disposed remotely from the housing, a light emitting diode, a second negative electrode disposed from the housing, and a second positive electrode disposed from the housing, the second positive electrode and the second negative electrode together connecting the normally open switch to the light emitting diode.

Another embodiment of the present invention includes a speaker disposed in the side of the housing.

Another feature is the presence of a variable resistor switch disposed on the front of the housing so that the intervals for starting the messages are also manually controllable.

In yet another feature of the present invention there is provided a volume control switch disposed on the front of the housing enabling control the message volume.

Still another feature of the present invention is to provide a power source operable by the vehicle cigarette lighter.

Having thus generally described the invention, reference will now be made to the accompanying drawings, illustrating preferred embodiments.

### BRIEF DESCRIPTION OF THE DRAWINGS

In the drawings, wherein similar reference numerals denote similar features throughout the several views:
Figure 1 is a perspective view of the self-contained device of the present invention mounted underneath the dashboard of the vehicle;
Figure 2 is an oblique view of Figure 1; and
Figure 3 is a schematic diagram of the interval circuitry means for controlling the intervals of time in which the audible message of the invention is to be repeated.

### DETAILED DESCRIPTION OF THE PREFERRED EMBODIMENTS

Referring to the drawings in which like numerals indicate like parts, the overall structure is designated by 12 which is a housing containing a speaker 24 and circuitry for producing a voice message. A VELCRO^{R} support strap 14 secures housing 12 to the underside of a vehicle dashboard (not shown).

The device 10 receives power from the vehicle through negative lead 16 and positive lead 18 which may terminate at their ends at a vehicle cigarette lighter adaptor (not shown). Alternatively, negative lead 16 and positive lead 18 may be connected to the power line of an accessory (not shown). The normally open switch 20 is remotely connected to the device 10 and provides manual activation or deactivation of the message.

The device 10 is easily retrofitted into a vehicle lacking such a warning device. The negative lead 19 may be attached to any appropriate structure under the dashboard as long as it is spaced apart from the housing 12, a sufficient distance, to assure that the speaker 24 will be free from obstructions. The VELCRO^{R} support strap 14, of suitable length, secures the device 10 to the vehicle. The negative lead 16 and the positive lead 18 are attached to respective positive and negative connections within the vehicle. With a proper adaptor, the device 10 may be plugged into a vehicle cigarette lighter socket or connected to the power wiring of an accessory, i.e. radio, heater, signal lights, etc. Device 10 is thus activated when an ignition or accessory switch is in the "ON" position, and is deactivated when such switch is in the "OFF" position, using a common ground.

Normally open switch 20 may take various forms, but will still be easily operable by the driver. Switch 20 is disposed at a convenient, remote location and is electrically connected to device 10. This enables a driver to attach the device 10 in the center of the bottom of the dashboard where a floor hump (only on rear wheel and four wheel drive vehicles) obscures free space from the dashboard center so that the normally open switch 20 must be mounted to the lower-left-hand portion of the dashboard for convenient reach. The switch 20 is an illuminated normally open momentary switch, which is approximately the size of a quarter, and may be adhered to any convenient location.

The device 10 is suspended by the strap 14 from e.g. a bracket or wire harness under the dashboard. The device 10 is suspended high enough thus allowing the occupants of the vehicle exposure to the speaker 24.

In normal operation, power is supplied to the device 10 through the negative lead 16 and the positive lead 18 when the ignition is switched on, as, for example, when the vehicle is started. The negative lead 16 and the positive lead 18 are twenty-gauge wire and are approximately four feet long to provide sufficient length to mount the normally open switch. A synthesized voice will begin to warn the driver by repeating a message, which continues to be repeated until the normally open switch 20 is pressed.

The driver of the vehicle may press the normally open switch 20 before the message is fully announced. The circuitry provides for complete subsequent messages. In this normal mode, the single pressing of the normally open switch 20 will deactivate the device 10.

The device supersedes known systems currently installed in vehicles today by giving the driver the ability to activate the device 10 whether or not the ignition has been switched off and back on. If, for example, a passenger enters the vehicle while the engine is running, the driver may manually activate the device 10 by pressing the normally open switch 20 once, to start the message. The normally open switch 20 acts as a toggle to alternately turn the device 10 on and off, so that once the new passenger has received the message, the normally open switch 20 can be pressed a second time to stop the message.

The individual circuits of the device 10 include a voltage regulator 30 which converts the vehicle voltage to the required working voltage and further protects the device 10 from surges in power. A speech processor is provided for creating the message and may take the form of a preprogrammed ROM, while a low pass filter sends the signal to the audio amplifier for driving the speaker 24.

The normally open switch 20 is connected to the speech processor and provides manual activation or deactivation of the message. A light emitting diode (L.E.D.) 22 may be installed between the power source and the circuitry for protection against reverse voltage spikes which are known to occur in vehicle electrical systems.

Additionally, the device 10 is provided with a volume control 28 and a variable resistor switch 26. The volume control 28 regulates the audible message volume. The variable resistor switch 26 regulates the intervals for starting the message.

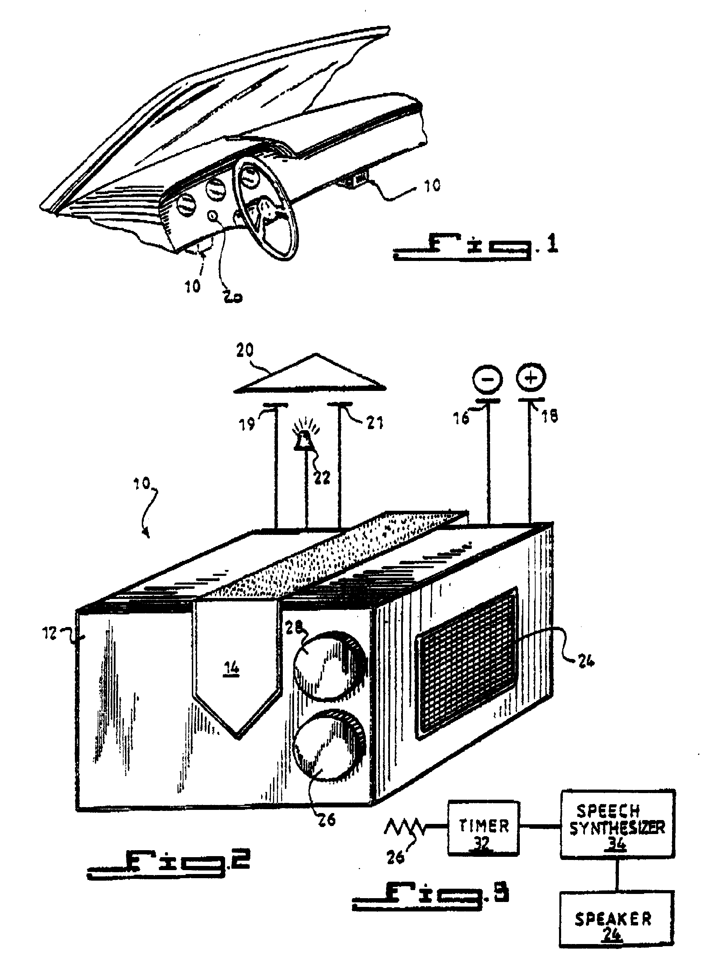

Figure 3 is a schematic diagram illustrating the circuitry of the interval circuitry timing means for controlling the time interval over which the audible message is to be repeated to passengers of the vehicle. In addition to the other features heretofore discussed, the interval circuitry means includes a timer device 32 and synthesizer 34.

## Claims

1. A self-contained device (10) for giving audible messages to occupants of a vehicle, comprising:
a) a housing (12) having a top, a side, and a front;
b) a power source disposed remotely from said housing (12);
c) a first negative electrode (16) disposed from said housing (12);
d) a first positive electrode (18) disposed from said housing (12), said first positive electrode (18) and said first negative electrode (16) together connecting the self-contained device (10) for giving audible messages to said remote power source; characterised by
e) a hook-and-loop fastening strap (14) disposed on said top of said housing so that the self-contained device (10) for giving audible messages to occupants of the vehicle can be mounted under the dashboard of the vehicle;
f) a normally open switch (20) disposed remotely from said housing (12);
g) a light emitting diode (22) for protection against reverse voltage spikes;
h) a second negative electrode (19) disposed from said housing (12); and
i) a second positive electrode (21) disposed from said housing (12), said second positive electrode (21) and said second negative electrode (19) together connecting said normally open switch (20) to said light emitting diode (22).

2. A device as claimed in claim 1, further comprising a speaker (24) disposed in said side of said housing (12) and a variable resistor switch (26) disposed on said front of said housing (12) so that the intervals for starting the messages are controlled.

3. A device as defined in claim 2, further comprising a volume control switch (28) disposed on said front of said housing (12) so that the audible message volume can be controlled.

4. A device as defined in claim 2, further comprising a voice synthesizer (34) that provides the messages through said speaker (24).

5. A device as defined in claim 3, further comprising interval control means (32) for starting the audible messages at pre-determined time intervals.

6. A device as defined in claim 5, wherein said interval control means (32) includes a variable resistor switch (26) disposed on said front of said housing (12).

7. A self-contained device (10) for giving audible messages to occupants of a vehicle, comprising:
a) a housing (12) having a top, a side, and a front;
b) a power source disposed remotely from said housing (12);
c) a first negative electrode (16) disposed from said housing (12) ;
d) a first positive electrode (18) disposed from said housing (12), said first positive electrode (18) and said first negative electrode (16) together connecting the self-contained device (10) from giving audible messages to said remote power source; characterised by
e) a hook-and-loop fastening strap (14) disposed on said top of said housing (12) so that the self-contained device (10) for giving audible messages to occupants of the vehicle is mountable under a dashboard of the vehicle;
f) a normally open switch (20) disposed remotely from said housing (12);
g) a light emitting diode (22) for protection against reverse voltage spikes;
h) a second negative electrode (19) disposed from said housing (12);
i) a second positive electrode (21) disposed from said housing (12), said second positive electrode (21) and said second negative electrode (19) together connecting said normally open switch (20) to said light emitting diode (22); and,
j) interval control means (32) for starting the audible messages at pre-determined time intervals, said interval control means (32) having a variable resistor switch (26) disposed on said front of said housing (12).

8. A device as defined in claims 1 or 7, further comprising a speaker (24) disposed in said side of said housing (12).

9. A device as defined in claim 8, further comprising a voice synthesizer (34) that provides the messages through said speaker (24).

10. A device as defined in claim 9, further comprising a volume control switch (28) disposed on said front of said housing (12) so that the audible message volume can be controlled.

## Patentansprüche

1. Unabhängiges Gerät (10) zum Ausgeben von hörbaren Mitteilungen an Fahrzeuginsassen, bestehend aus
a) einem Gehäuse (12) mit einer Deckfläche, einer Seiten- und einer Frontfläche,
b) einer vom Gehäuse (12) entfernt angeordneten Energiequelle,
c) einer ersten negativen, außerhalb des Gehäuses (12) angeordneten Elektrode (16),
d) einer ersten positiven, außerhalb des Gehäuses (12) angeordneten Elektrode (18), wobei die erste positive Elektrode (18) und die erste negative Elektrode (16) gemeinsam das unabhängige Gerät (10) zum Ausgeben von hörbaren Mitteilungen mit der entfernt angeordneten Energiequelle verbinden, gekennzeichnet durch
e) einen Klettbefestigungsstreifen (14) auf der Deckfläche des Gehäuses, so daß das unabhängige Gerät (10) zum Ausgeben von hörbaren Mitteilungen an Fahrzeuginsassen unter dem Armaturenbrett des Fahrzeugs befestigbar ist,
f) einen üblicherweise geöffneten Schalter (20), der entfernt vom Gehäuse (12) angeordnet ist,
g) eine Leuchtdiode (22) zum Schutz vor Gegenspannungsspitzen,
h) eine zweite negative Elektrode (19), die von dem Gehäuse (12) entfernt angeordnet ist und
i) eine zweite positive Elektrode (21), die vom Gehäuse (12) entfernt angeordnet ist, wobei die zweite positive Elektrode (21) und die zweite negative Elektrode (19) gemeinsam den üblicherweise geöffneten Schalter (20) mit der Leuchtdiode (22) verbinden.

2. Gerät nach Anspruch 1, dadurch gekennzeichnet, daß es einen Lautsprecher (24) in der Seitenfläche des Gehäuses (12) und einen verstellbaren Widerstandsschalter (26) an der Frontseite des Gehäuses (12) aufweist, so daß die Intervalle zum Starten der Mitteilungen steuerbar sind.

3. Gerät nach Anspruch 2, dadurch gekennzeichnet, daß es einen Lautstärkensteuerschalter (28) an der Frontseite des Gehäuses (12) aufweist, so daß die Lautstärke der hörbaren Mitteilungen gesteuert werden kann.

4. Gerät nach Anspruch 2, dadurch gekennzeichnet, daß es einen Sprachsynthesizer (34) aufweist, der die Mitteilungen über den Lautsprecher (24) erzeugt.

5. Gerät nach Anspruch 3, dadurch gekennzeichnet, daß es ein Intervallsteuerelement (32) zum Auslösen der hörbaren Mitteilungen in vorbestimmten Zeitintervallen aufweist.

6. Gerät nach Anspruch 5, dadurch gekennzeichnet, daß das Intervallsteuerelement (32) einen verstellbaren Widerstandsschalter (26) umfaßt, der an der Frontseite des Gehäuses (12) angebracht ist.

7. Unabhängiges Gerät (10) zum Ausgeben von hörbaren Mitteilungen an Fahrzeuginsassen, bestehend aus
a) einem Gehäuse (12) mit einer Deckfläche, einer Seiten- und einer Frontfläche,
b) einer vom Gehäuse (12) entfernt angeordneten Energiequelle,
c) einer ersten negativen, außerhalb des Gehäuses (12) angeordneten Elektrode (16),
d) einer ersten positiven, außerhalb des Gehäuses (12) angeordneten Elektrode (18), wobei die erste positive Elektrode (18) und die erste negative Elektrode (16) gemeinsam das unabhängige Gerät (10) zum Ausgeben von hörbaren Mitteilungen mit der entfernt angeordneten Energiequelle verbinden, gekennzeichnet durch
e) einen Klettbefestigungsstreifen (14) auf der Deckfläche des Gehäuses, so daß das unabhängige Gerät (10) zum Ausgeben von hörbaren Mitteilungen an Fahrzeuginsassen unter dem Armaturenbrett des Fahrzeugs befestigbar ist,
f) einen üblicherweise geöffneten Schalter (20), der entfernt vom Gehäuse (12) angeordnet ist,
g) eine Leuchtdiode (22) zum Schutz vor Gegenspannungsspitzen,
h) eine zweite negative Elektrode (19), die von dem Gehäuse (12) entfernt angeordnet ist,
i) eine zweite positive Elektrode (21), die vom Gehäuse (12) entfernt angeordnet ist, wobei die zweite positive Elektrode (21) und die zweite negative Elektrode (19) gemeinsam den üblicherweise geöffneten Schalter (20) mit der Leuchtdiode (22) verbinden und
j) ein Intervallsteuerelement (32) zum Auslösen der hörbaren Mitteilungen in vorbestimmten Zeitintervallen, wobei das Intervallsteuerelement (32) einen verstellbaren Widerstandsschalter (26) aufweist, der an der Frontseite des Gehäuses (12) angebracht ist.

8. Gerät nach Anspruch 1 oder 7, dadurch gekennzeichnet, daß es einen Lautsprecher (24) in der Seitenfläche des Gehäuses (12) aufweist.

9. Gerät nach Anspruch 8, dadurch gekennzeichnet, daß es einen Sprachsynthesizer (34) aufweist, der die Mitteilungen über den Lautsprecher (24) erzeugt.

10. Gerät nach Anpruch 9, dadurch gekennzeichnet, daß es einen Lautstärkensteuerschalter (28) an der Frontseite des Gehäuses (12) aufweist, so daß die Lautstärke der hörbaren Mitteilungen gesteuert werden kann.

## Revendications

1. Dispositif autonome (10) pour délivrer des messages audibles à des occupants d'un véhicule, comprenant :
a) un boîtier (12) comportant un couvercle, un côté et une face avant ;
b) une alimentation disposée à distance dudit boîtier (12) ;
c) une première électrode négative (16) disposée partant dudit boîtier (12) ;
d) une première électrode positive (18) disposée partant dudit boîtier (12), ladite première électrode positive (18) et ladite première électrode négative (16) reliant ensemble le dispositif autonome (10) pour délivrer des messages audibles à ladite alimentation distante ;
caractérisé par
e) une bande de fixation à crochet et boucle (14) disposée sur le couvercle dudit boîtier de sorte que le dispositif autonome (10) pour délivrer des messages audibles aux occupants du véhicule peut être monté sous le tableau de bord du véhicule ;
f) un interrupteur normalement ouvert (20) disposé à distance dudit boîtier (12) ;
g) une diode électroluminescente (22) pour protection contre les crêtes de tension inverse ;
h) une seconde électrode négative (19) disposée partant dudit boîtier (12) ; et
i) une seconde électrode positive (21) disposée partant dudit boîtier (12), ladite seconde électrode positive (21) et la seconde électrode négative (19) reliant ensemble ledit interrupteur normalement ouvert (20) à ladite diode électroluminescente (22).

2. Dispositif selon la revendication 1, comprenant de plus un haut-parleur (24) disposé dans ledit côté dudit boîtier (12) et un commutateur à résistance variable (26) disposé sur ladite face avant dudit boîtier (12) de manière à ce que les intervalles de temps pour lancer les messages soient contrôlés.

3. Dispositif selon la revendication 2, comprenant de plus un commutateur de réglage du volume (28) disposé sur ladite face avant dudit boîtier (12) de sorte que le volume des messages audibles puisse être contrôlé.

4. Dispositif selon la revendication 2, comprenant de plus un synthétiseur vocal (34) qui délivre les messages par l'intermédiaire dudit haut-parleur (24).

5. Dispositif selon la revendication 3, comprenant de plus un moyen de commande d'intervalle de temps (32) pour lancer les messages audibles à des intervalles de temps prédéterminés.

6. Dispositif selon la revendication 5, dans lequel ledit moyen de commande d'intervalle de temps (32) comporte un commutateur à résistance variable (26) disposé sur ladite face avant dudit boîtier (12).

7. Dispositif autonome (10) pour délivrer de messages audibles aux occupants d'un véhicule, comprenant :
a) un boîtier (12) ayant un couvercle, un côté et une face avant ;
b) une alimentation disposée à distance dudit boîtier (12) ;
c) une première électrode négative (16) disposée partant dudit boîtier (12) ;
d) une première électrode positive (18) disposée partant dudit boîtier (12), ladite première électrode positive (18) et ladite première électrode négative (16) reliant ensemble le dispositif autonome (10) destiné à délivrer des messages audibles à ladite alimentation distante ;
caractérisé par
e) une bande de fixation à crochet et boucle (14) disposée sur ledit couvercle dudit boîtier de sorte que le dispositif autonome (10) pour délivrer des messages audibles aux occupants d'un véhicule peut être monté sous le tableau de bord du véhicule ;
f) un interrupteur normalement ouvert (20) disposé à distance dudit boîtier (12) ;
g) une diode électroluminescente (22) pour protection contre les crêtes de tension inverse ;
h) une seconde électrode négative (19) disposée partant dudit boîtier (12) ;
i) une seconde électrode positive (21) disposée partant dudit boîtier (12), ladite seconde électrode positive (21) et ladite seconde électrode négative (19) reliant ensemble ledit interrupteur normalement ouvert (20) à ladite diode électroluminescente (22) ; et
j) un moyen de commande d'intervalle de temps (32) pour lancer les messages audibles à des intervalles de temps prédéterminés, le moyen de commande d'intervalle de temps (32) ayant un commutateur à résistance variable (26) disposé sur ladite face avant dudit boîtier (12).

8. Dispositif selon la revendication 1 ou 7, comprenant de plus un haut-parleur (24) disposé dans ledit côté dudit boîtier (12).

9. Dispositif selon la revendication 8, comprenant de plus un synthétiseur vocal (34) qui délivre les messages par l'intermédiaire dudit haut-parleur (24).

10. Dispositif selon la revendication 9, comprenant de plus un commutateur de réglage du volume (28) disposé sur ladite face avant dudit boîtier (12) de sorte que le volume des messages audibles peut être contrôlé.
